(19) Europäisches Patentamt / European Patent Office / Office européen des brevets

(11) **EP 4 198 568 B1**

(12) **EUROPÄISCHE PATENTSCHRIFT**

(45) Veröffentlichungstag und Bekanntmachung des Hinweises auf die Patenterteilung:
**09.10.2024   Patentblatt 2024/41**

(21) Anmeldenummer: **21215229.2**

(22) Anmeldetag: **16.12.2021**

(51) Internationale Patentklassifikation (IPC):
*G01S 17/42* (2006.01)   *G01S 17/86* (2020.01)
*G01S 17/89* (2020.01)   *G01S 7/481* (2006.01)
*G01S 7/497* (2006.01)

(52) Gemeinsame Patentklassifikation (CPC):
**G01S 17/42; G01S 7/4813; G01S 7/497;
G01S 17/86; G01S 17/89**

(54) **VORRICHTUNG ZUM VERMESSEN EINER UMGEBUNG**

DEVICE FOR MEASURING AN ENVIRONMENT

DISPOSITIF DE MESURE D'UN ENVIRONNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**21.06.2023   Patentblatt 2023/25**

(73) Patentinhaber: **RIEGL Laser Measurement Systems GmbH**
**3580 Horn (AT)**

(72) Erfinder:
• **RIEGL, Johannes**
  **3754 Trabenreith (AT)**
• **RIEGL, Ursula**
  **1010 Wien (AT)**
• **PFENNIGBAUER, Martin**
  **3430 Tulln (AT)**

(74) Vertreter: **Weiser & Voith**
**Patentanwälte Partnerschaft**
**Kopfgasse 7**
**1130 Wien (AT)**

(56) Entgegenhaltungen:
**US-A1- 2010 141 928     US-B1- 10 908 383**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft eine Vorrichtung gemäß dem Oberbegriff des Anspruchs 1.

Vorrichtungen dieser Art, auch topographische Laserscanner genannt, sind z.B. aus der US 2010/0141928 A1 bekannt und werden stationär oder mobil verwendet, um Umgebungen aller Art, z.B. Landschaften, Städte, Tag- oder Untertag-Bergwerke, Gewässer, den Meeresboden usw. zu vermessen. Der Laserstrahl wird dabei von der Ablenkeinrichtung z.B. zeilenweise oder annähernd kreisförmig über die Umgebung bewegt, und die Vielzahl solcherart abgetasteter Abtastpunkte stellt eine Abtastpunktwolke, ein 3D-Abbild, der Umgebung dar.

Durch den Sensor zur Bestimmung des Brechungsindexes des außerhalb des Durchtrittsfensters befindlichen Mediums der Umgebung, wobei der Prozessor den vom Sensor bestimmten Brechungsindex bei der Messung der Entfernungen und Richtungen der Abtastpunkte berücksichtigt, passt sich die Laserscanvorrichtung automatisch an das sie umgebende Medium, sei es Luft, feuchte Luft oder Wasser, an. Es sei an dieser Stelle erwähnt, dass eine mediumabhängige Steuerung eines optischen Elements für einen anderen Zweck, nämlich einen Miniaturprojektor für strukturiertes Licht, an sich aus der US 10 908 383 B1 bekannt ist.

Der Brechungsindex des Mediums zwischen Laserscanvorrichtung und Abtastpunkten der Umgebung beeinflusst die Erstellung der Abtastpunktwolke auf zweierlei Art: Einerseits schlägt sich der Brechungsindex n, welcher proportional dem Verhältnis der Vakuumlichtgeschwindigkeit $c_0$ zur Lichtgeschwindigkeit c im Medium ist:

$$n = \frac{c_0}{c} \qquad (1)$$

in der Berechnung der Entfernung d eines Abtastpunktes aus der gemessenen Laufzeit $\Delta T$ des zum Abtastpunkt hin- und zurücklaufenden Laserstrahls nieder:

$$d = c \cdot \Delta T / 2 = \frac{c_0}{n} \cdot \Delta T / 2 \qquad (2)$$

Andererseits verändert der Brechungsindex die von der Vorrichtung aus gesehene Richtung des solcherart vermessenen Abtastpunkts und damit dessen Lage in der Abtastpunktwolke, und zwar wegen des brechungsindexabhängigen Brechungswinkels

$$\Delta \alpha = \alpha - \alpha_0 \qquad (3)$$

des Laserstrahls bei dessen Übergang von einer Vorrichtung mit internem Brechungsindex $n_0$ unter dem Einfallswinkel $\alpha_0$ in ein Medium mit Brechungsindex n unter dem Ausfallswinkel $\alpha$ gemäß dem Snellius'schen Brechungsgesetz:

$$\frac{\sin \alpha}{\sin \alpha_0} = \frac{n_0}{n} \qquad (4)$$

Durch Bestimmung und automatische Berücksichtigung des Brechungsindexes des Umgebungsmediums der Laserscanvorrichtung sowohl bei der Entfernungsberechnung als auch Richtungsbestimmung der Abtastpunkte in der Abtastpunktwolke kann somit die Abtastpunktwolke unabhängig von der jeweiligen Anwendungsumgebung der Vorrichtung erstellt werden.

Wie aus Gleichung (1) ersichtlich, ist der Brechungsindex n eines Mediums umgekehrt proportional zur Lichtgeschwindigkeit c im Medium. Das Bestimmen des Brechungsindexes ist daher funktionell äquivalent mit dem Bestimmen der Lichtgeschwindigkeit im jeweils betrachteten Medium. Die Begriffe "Brechungsindex" und "Lichtgeschwindigkeit" eines Mediums sind daher für die Zwecke der vorliegenden Erfindung funktionell äquivalente Synonyme, insbesondere in Hinblick auf ihre Berücksichtigung durch den Prozessor bei der Berechnung der Entfernungen und Richtungen der Abtastpunkte.

Die Erfindung setzt sich zum Ziel, eine Laserscanvorrichtung der genannten Art so weiterzubilden, dass sie universell für unterschiedlichste Arten von Umgebungen einsetzbar ist und dabei stets korrekte Abtastpunktwolken erzeugt.

Dieses Ziel wird mit einer Vorrichtung der einleitend genannten Art erfindungsgemäß dadurch erreich, dass der Laserstrahl vom Sender mit einer vom Prozessor steuerbaren Impulswiederholrate gepulst ist, wobei der Prozessor dafür ausgebildet ist, die Impulswiederholrate bei einem ersten, größeren, vom Sensor bestimmten Brechungsindex zu verringern und bei einem zweiten, kleineren, vom Sensor bestimmten Brechungsindex zu erhöhen.

Damit kann der geringeren Fortbewegungsgeschwindigkeit der Laserscanvorrichtung in einem dichteren Medium wie Wasser Rechnung getragen werden. Insbesondere kann so eine redundante Überlappung von Abtastpunkten wegen zu geringer Fortbewegungsgeschwindigkeit oder deswegen reduzierter Ablenkgeschwindigkeit vermieden werden. Umgekehrt kann beim Scannen in einem dünneren Medium wie Luft, wenn Fortbewegungs- und/oder Ablenkgeschwindigkeit des Laserscanners hoch sind, die Impulswiederholrate zwecks Maximierung der Anzahl an Abtastpunkten entsprechend erhöht werden.

Mithilfe des erfindungsgemäßen Brechungsindex-Sensors können nicht nur die Entfernungen und Richtungen der Abtastpunkte mediumabhängig korrigiert werden, sondern auch noch weitere Parameter der Laserscanvorrichtung eingestellt werden. In einer ersten bevorzugten Ausführungsform der Erfindung ist dazu im Strahlengang des Laserstrahls zumindest ein vom Prozessor gesteuertes optisches Element angeordnet und der Prozessor dafür ausgebildet, das zumindest eine optische Element in Abhängigkeit des vom Sensor bestimmten Brechungsindexes zu steuern.

Das optische Element kann dabei für verschiedenste Zwecke eingesetzt werden. So kann in einer ersten Variante im Strahlengang des Laserstrahls zwischen Sender und Ablenkeinrichtung ein erstes, vom Prozessor gesteuertes optisches Element zur Veränderung der Strahldivergenz des ausgesandten Laserstrahls angeordnet sein, wobei der Prozessor dafür ausgebildet ist, die Strahldivergenz bei einem ersten, größeren, vom Sensor bestimmten Brechungsindex zu verringern und bei einem zweiten, kleineren, vom Sensor bestimmten Brechungsindex zu erhöhen. Damit kann beispielsweise beim Scannen in Wasser eine minimale Strahldivergenz des ausgesandten Laserstrahls eingestellt werden, um besonders kleine Abtastpunkte und damit eine hohe räumliche Auflösung zu erzielen, wogegen beim Scannen in Luft eine größere Strahldivergenz verwendet werden kann, wie sie für die Augensicherheit beim Laserscannen im Freien wünschenswert ist.

In einer zweiten Variante kann alternativ oder zusätzlich im Strahlengang des Laserstrahls zwischen Ablenkeinrichtung und Empfänger ein zweites, vom Prozessor gesteuertes optisches Element zur Veränderung des Empfangsgesichtsfelds des Empfängers für den reflektierten Laserstrahls angeordnet sein, wobei der Prozessor dafür ausgebildet ist, das Empfangsgesichtsfeld bei einem ersten, größeren, vom Sensor bestimmten Brechungsindex zu erhöhen und bei einem zweiten, kleineren, vom Sensor bestimmten Brechungsindex zu verringern. Damit kann beispielsweise der erhöhten Streuung des Laserstrahls im Wasser Rechnung getragen werden. Ein größeres Empfangsgesichtsfeld beim Scannen in Wasser liefert ein größeres Empfangssignal und damit ein besseres Signal/Rausch-Verhältnis im Empfänger für die Laufzeitmessung. Umgekehrt kann beim Scannen in Luft das Empfangsgesichtsfeld reduziert werden, um Störungen durch Umgebungsstreulicht zu minimieren.

In einer zweiten bevorzugten Ausführungsform der erfindungsgemäßen Vorrichtung, bei welcher die Ablenkeinrichtung mit einem vom Prozessor gesteuerten Antrieb zum periodischen Verändern der Ablenkrichtung mit einer Ablenkgeschwindigkeit ausgestattet ist, ist der Prozessor dafür ausgebildet, die Ablenkgeschwindigkeit bei einem ersten, größeren, vom Sensor bestimmten Brechungsindex zu verringern und bei einem zweiten, kleineren, vom Sensor bestimmten Brechungsindex zu erhöhen. Damit kann beispielsweise der geringeren Fortbewegungsgeschwindigkeit beim Scannen in Wasser, wenn die Laserscanvorrichtung dem Wasserwiderstand unterworfen ist, Rechnung getragen werden. Denn bei reduzierter Fortbewegungsgeschwindigkeit würde sich sonst eine ungleichmäßige Verteilung der Abtastpunkte über die Umgebung ergeben, wenn die Ablenkgeschwindigkeit nicht entsprechend reduziert wird. Umgekehrt ist beim Scannen in einem "dünnen" Medium wie Luft eine größere Fortbewegungsgeschwindigkeit zu erwarten, und durch entsprechende Erhöhung der Ablenkgeschwindigkeit kann ein gleichmäßiges Abtastpunktemuster über die Umgebung erzielt werden.

Die Vorrichtung der Erfindung kann sowohl stationär als auch mobil verwendet werden. Beispielsweise ist die Vorrichtung auf einem beliebigen Land-, Luft- oder Wasserfahrzeug, z.B. einem Boot, einem Straßen- oder Schienenfahrzeug, einer Drohne, einer Laufkatze od.dgl., montiert oder als solches ausgebildet. Bei Betrieb am oder im Wasser kann die Vorrichtung z.B. über ein Kabel mit einem Begleitboot verbunden sein und über diese Kabelverbindung sowohl stromversorgt werden als auch Daten übertragen.

Bevorzugt ist die Vorrichtung in Form eines Luftfahrzeugs ausgebildet, das mit Schwimmkörpern zur Wasserlandung ausgestattet ist, wobei die genannte Gehäuseseite nach unten weist. Dadurch kann die Vorrichtung sowohl im Flugbetrieb (Umgebungsmedium Luft) zur Vermessung von Landoberflächen, Wasseroberflächen und/oder Unterwasserobjekten oder Gewässerböden verwendet werden als auch im Schwimm- oder Unterwasserbetrieb (Umgebungsmedium Wasser) zur Vermessung von Unterwasserobjekten oder Gewässerböden. Die Laserscanvorrichtung der Erfindung stellt sich dabei automatisch auf das jeweilige Umgebungsmedium ein, sodass stets eine korrekte Abtastpunktwolke erzeugt wird.

Die Erfindung eignet sich besonders für unbemannte, wasserlandefähige Luftfahrzeuge. Eine als wasserlandefähiges Luftfahrzeug ausgebildete Vorrichtung kann bevorzugt mit zumindest einer Luft- oder Wasserschraube zum Vortrieb beim Schwimmen ausgestattet sein, um auch größere Bereiche des Gewässerbodens zu vermessen.

Der Sensor zur Bestimmung des Brechungsindexes des Umgebungsmediums kann von jeder in der Technik bekannten Art sein, z.B. ein Feuchtigkeits- oder Wassersensor, der nach einem Leitfähigkeits-, kapazitiven oder induktiven Prinzip arbeitet und aus der Feuchtigkeit des Umgebungsmediums dessen Brechungsindex bestimmt. Besonders vorteilhaft ist er ein elektrooptischer Sensor, der ein auf der genannten Seite des Gehäuses liegendes Messfenster aus wasserdichtem, transparentem Material hat und dafür ausgebildet ist, den Brechungsindex durch Bestimmung des Grenzwinkels der Totalreflexion vom Messfenster zum Medium zu bestimmen. Mit diesem Prinzip kann der Brechungsindex in genau dem interessierenden, für den Laserstrahl verwendeten Wellenlängenbereich bestimmt werden, wenn für die Bestimmung des Grenzwinkels der Totalreflexion ein Lichtstrahl desselben Wellenlängenbereichs verwendet wird.

Bevorzugt kann für das Messfenster ein Bereich des Durchtrittsfensters mitverwendet werden, sodass nur ein einziges Gehäusefenster erforderlich ist.

Die Erfindung wird nachstehend anhand von in den beigeschlossenen Zeichnungen dargestellten Ausführungsbeispielen näher erläutert. In den Zeichnungen zeigt:

Fig. 1 die Vorrichtung der Erfindung, ausgebildet als wasserlandefähiges Luftfahrzeug, beim luftgestützten Vermessen einer Umgebung in einer schematischen Perspektivansicht;
Fig. 2 die Vorrichtung der Erfindung in einem Blockschaltbild beim luftgestützten Vermessen einer Umgebung;
Fig. 3 die Vorrichtung der Erfindung in einem ausschnittsweisen Blockschaltbild beim wassergestützten Vermessen einer Umgebung; und
Fig. 4 die Vorrichtung der Erfindung, ausgebildet als wasserlandefähiges Luftfahrzeug, in zwei verschiedenen Betriebsstellungen in einem schematischen Schnitt, und zwar einmal beim luftgestützten und einmal beim wassergestützten Vermessen einer Umgebung.

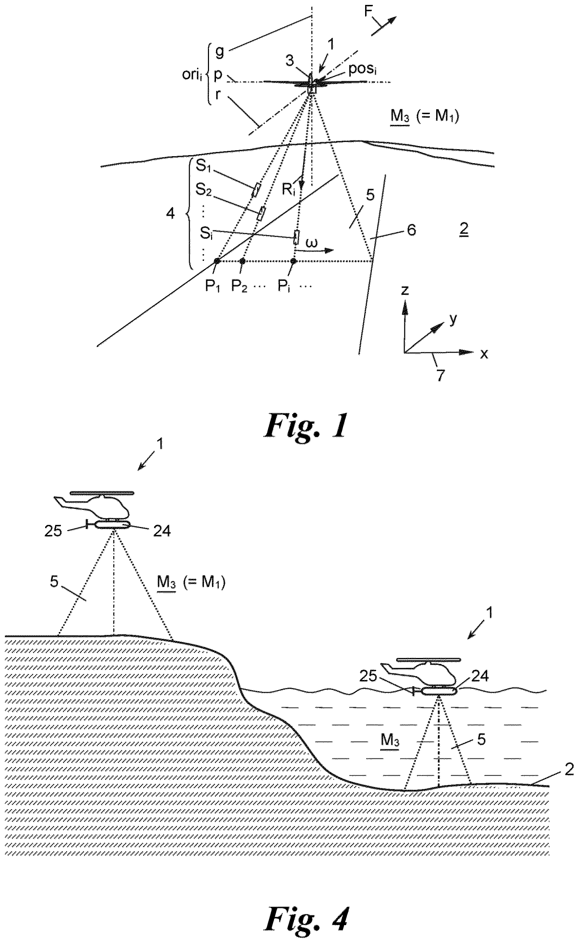

In Fig. 1 ist eine Vorrichtung 1 zum Vermessen einer Umgebung 2 von einem Fahrzeug 3 aus gezeigt. Die zu vermessende Umgebung 2 kann beispielsweise eine Landschaft (Terrain) sein, aber auch der Straßenboden und die Fassaden entlang eines Stra-ßenzugs, die Innenoberfläche einer Halle, eines Tunnels oder Bergwerks, oder die Meeresoberfläche und/oder der Meeresboden, usw. Bei dem Fahrzeug 3 kann es sich um ein Land-, Luft- oder Wasserfahrzeug handeln, bemannt oder unbemannt; in Fig. 1 ist beispielhaft ein wasserlandefähiges Luftfahrzeug gezeigt. Alternativ könnte die Vorrichtung 1 auch stationär sein und entweder eine ruhende oder eine gegenüber der Vorrichtung 1 relativbewegte Umgebung 2 vermessen, z.B. auf einem Förderband bewegte Gegenstände, Werkstücke, etc.

Die Vorrichtung 1 tastet mittels eines kontinuierlichen oder (hier:) gepulsten Laserstrahls 4 die Umgebung 2 zu deren Vermessung ab. Der Laserstrahl 4 wird dazu beispielsweise zur Bildung eines Messfächers 5 mit einer Winkelgeschwindigkeit $\omega$ verschwenkt und in Fortbewegungsrichtung F des Fahrzeugs 3 vorwärtsbewegt, um die Umgebung 2 in nebeneinanderliegenden Scanstreifen 6 (nur einer gezeigt) abzutasten. Anstelle von fächerartig und damit zeilenweise abtastend könnte der Laserstrahl 4 auch auf andere Weise über die Umgebung 2 geführt werden, beispielsweise annähernd kreisförmig, wie es bei sog. Risley- oder Palmerscannern der Fall ist.

Aus Laufzeitmessungen an Laserimpulsen $S_i$ ($i = 1, 2, ...$), die von der Vorrichtung 1 in Form des Laserstrahls 4 ausgesandt, jeweils an einem Punkt $P_i$ der Umgebung 2 reflektiert und als umgebungsreflektierte Laserimpulse $E_i$ in der Vorrichtung 1 zurückerhalten werden, können Entfernungsmesswerte $d_i$ von der jeweils aktuellen Position $pos_i$ der Vorrichtung 1 zum jeweiligen Abtastpunkt $P_i$ der Umgebung 2 berechnet werden anhand der bekannten Beziehung:

$$d_i = c \cdot \Delta T_i / 2 = c \cdot (t_{E,i} - t_{S,i}) / 2 \qquad (5)$$

mit

$t_{S,i}$     Sendezeitpunkt des Sende-Laserimpulses $S_i$,
$t_{E,i}$     Empfangszeitpunkt des Empfangs-Laserimpulses $E_i$, und
$c$     Lichtgeschwindigkeit im Medium $M_3$ (hier: Luft), das sich zwischen der Vorrichtung 1 und der Umgebung 2 befindet.

Bei einem kontinuierlichen Laserstrahl 4 könnten die Entfernungen $d_i$ alternativ mittels Interferenzmessungen bestimmt werden.

In Kenntnis der jeweiligen Position $pos_i$ der Vorrichtung 1 bei Aussendung des Laserimpulses $S_i$ in einem lokalen oder globalen Koordinatensystem 7 der Umgebung 2, der jeweiligen Orientierung $ori_i$ der Vorrichtung 1 im Koordinatensystem 7, angegeben z.B. durch die Kipp-, Roll- und Gierwinkel des Fahrzeugs 3 um seine Quer-, Längs- und Hochachsen p, r, y, und der jeweiligen Winkellage $\alpha_{1,i}$ des Laserstrahls 4 bezüglich der Vorrichtung 1 kann dann aus dem jeweiligen Entfernungsmesswert $d_i$ die Position des Abtastpunkts $P_i$ im Koordinatensystem 7 berechnet werden. Eine Vielzahl solcherart vermessener Abtastpunkte $P_i$ bildet die Umgebung 2 in Form einer Abtastpunktwolke 8 im Koordinatensystem 7 ab.

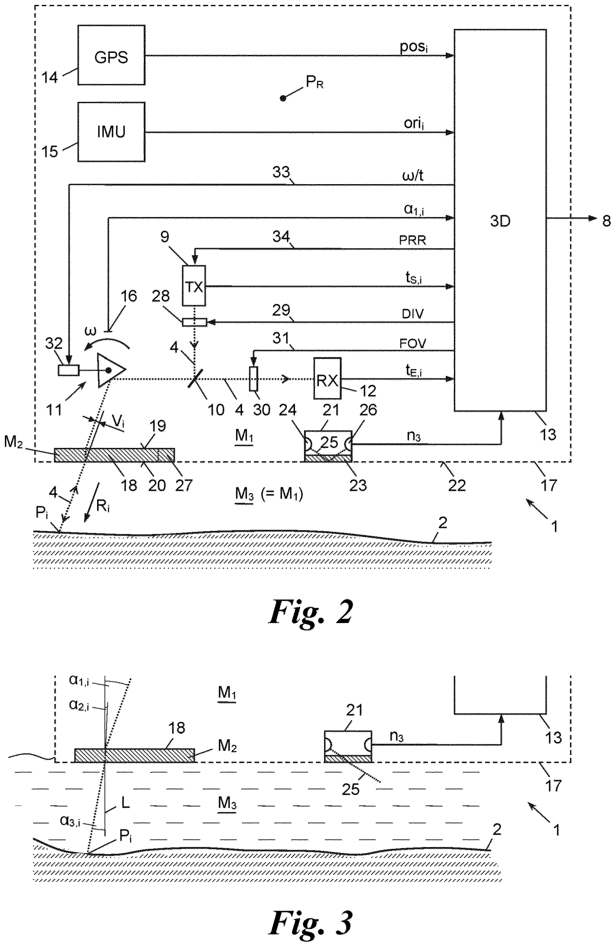

Fig. 2 zeigt die Komponenten der Vorrichtung 1 zum Erzeugen der Entfernungsmesswerte $d_i$ im Detail. Die

Sende-Laserimpulse $S_i$ werden von einem Lasersender 9 über einen halbdurchlässigen Spiegel 10 und eine Ablenkeinrichtung 11, z.B. einen schwingenden Spiegel oder ein rotierendes Polygonspiegelrad oder eine rotierende Spiegelpyramide, ausgesandt, nach Reflexion am jeweiligen Umgebungspunkt $P_i$ auf demselben Weg über die Ablenkeinrichtung 11 als umgebungsreflektierte bzw. Empfangs-Laserimpulse $E_i$ zurückerhalten, durchsetzen den halbdurchlässigen Spiegel 10 und treffen auf einem Laserempfänger 12 auf. Die Sendezeitpunkte $t_{s,i}$ der Laserimpulse $S_i$ und die Empfangszeitpunkte $t_{E,i}$ der umgebungsreflektierten Laserimpulse $E_i$ werden einem Prozessor 13 zugeführt, welcher anhand der Gleichung (5) die Laufzeiten $\Delta T_i$ des Laserstrahls 4 zu den Abtastpunkten $P_i$ und zurück und daraus die Entfernungen $d_i$ berechnet.

Wenn die Vorrichtung 1 mobil ist, insbesondere fahrzeuggestützt, verfügt sie über eine Positionbestimmungseinrichtung 14 zur Bestimmung ihrer eigenen aktuellen Position $pos_i$ im Koordinatensystem 7, z.B. einen Satellitennavigationsempfänger, und eine Orientierungsbestimmungseinrichtung 15 zur Bestimmung ihrer aktuellen Orientierung (Winkellage) im Koordinatensystem 7, z.B. eine Trägheitsmesseinrichtung (Inertial Measurement Unit, IMU) zur Messung des aktuellen Gravitationsvektors bezüglich der Vorrichtung 1.

Die aktuelle (Raum-)Winkellage $\alpha_{1,i}$ und damit Ablenkrichtung des Laserstrahls 4 bezüglich der Vorrichtung 1 wird von einer an die Ablenkeinrichtung 11 angeschlossenen Messeinrichtung 16 ermittelt, beispielsweise anhand der aktuellen Stellung der rotierenden Spiegelanordnung darin. Aus der aktuellen Winkellage bzw. Ablenkrichtung $\alpha_{1,i}$ des Laserstrahls 4 gegenüber der Vorrichtung 1 und aus der aktuellen Orientierung $ori_i$ der Vorrichtung 1 im Koordinatensystem 7 kann der Prozessor 13 somit die aktuelle Richtung $R_i$ des Laserstrahls 4 bei der Vermessung des Abtastpunkts $P_i$ im Koordinationsystem 7 ermitteln. Der Prozessor 13 kann dann den Abtastpunkt $P_i$ - ausgehend von der Position $pos_i$ in der Richtung $R_i$ und der Entfernung $d_i$ - im Koordinatensystem 7 und damit in der Abtastpunktwolke 8 korrekt verorten.

Bislang wurde davon ausgegangen, dass das Medium $M_3$ zwischen der Vorrichtung 1 und der Umgebung 2 gleich ist wie das Medium $M_1$, in dem auch die Ablenkeinrichtung 11 arbeitet (hier: Luft), wie es beim luftgestützten Laserscanner in den Fig. 1 und 2 der Fall ist. Zwar erfährt, wenn die Vorrichtung 1 ein Gehäuse 17 mit einem Durchtrittsfenster 18 aus transparentem Material, z.B. Kunststoff oder Glas, für den Laserstrahl 4 hat, der Laserstrahl 4 beim schrägen Passieren des Durchtrittsfensters 18 brechungsbedingt einen geringen Parallelversatz $V_i$, doch ist dieser Parallelversatz $V_i$ - der sich nur auf die Position $pos_i$ und nicht die Richtung $R_i$ auswirkt - in der Regel vernachlässigbar (könnte jedoch vom Prozessor 13 bei der Verortung der Abtastpunkte $P_i$ berücksichtigt werden, falls gewünscht).

Wenn die Vorrichtung 1 jedoch in einem anderen Umgebungsmedium $M_3$ (hier: z.B. Wasser) betrieben wird, das sich von dem Medium $M_1$ im Gehäuse 17 zwischen der Ablenkeinrichtung 11 und dem Durchtrittsfenster 18 unterscheidet, siehe Fig. 3 und 4, dann erfährt der Laserstrahl 4 beim schrägen Passieren des Durchtrittsfensters 18 nicht nur einen Parallelversatz $V_i$ sondern auch einen Winkelversatz

$$\Delta\alpha_i = (\alpha_{2,i} - \alpha_{1,i}) + (\alpha_{3,i} - \alpha_{2,i}) = \alpha_{3,i} - \alpha_{1,i} \qquad (6)$$

welcher sich aus der zweimaligen Brechung des Laserstrahls 4 erstens an der Innenseite 19 des Durchtrittsfensters 18 beim Übergang vom Medium $M_1$ zum Medium (Material) $M_2$ des Durchtrittsfensters 18 und zweitens an der Außenseite 20 des Durchtrittsfensters 18 beim Übergang vom Medium $M_2$ zum Umgebungsmedium $M_3$ ergibt. Die beiden Brechungen an den Innen- und Außenseiten 19, 20 des Durchtrittsfensters 18 folgen dabei jeweils dem Snellius'schen Brechungsgesetz:

$$n_1 \sin\alpha_{1,i} = n_2 \sin\alpha_{2,i} \qquad (7)$$

und

$$n_2 \sin\alpha_{2,i} = n_3 \sin\alpha_{3,i} \qquad (8)$$

mit

$n_1, n_2, n_3$      Brechungsindizes der Medien $M_1$, $M_2$, $M_3$ und
$\alpha_{1,i}, \alpha_{2,i}, \alpha_{3,i}$      jeweiliger Ein- bzw. Ausfallswinkel des Laserstrahls 4 zum Lot L auf die Innen- bzw. Außenseite 19, 20.

Da der Innenaufbau der Vorrichtung 1, d.h. die Geometrien und Relativlagen ihrer Komponenten, insbesondere der Ablenkeinrichtung 11 und des Durchtrittsfensters 18, sowie die Medien $M_1$ und $M_2$ und damit die Brechungsindizes $n_1$ und $n_2$ bekannt sind, lässt sich der erste Teil $(\alpha_{2,i} - \alpha_{1,i})$ des Winkelversatzes $\Delta\alpha_i$ direkt berechnen.

Der zweite Teil ($\alpha_{3,i}$ – $\alpha_{2,i}$) des Winkelversatzes $\Delta\alpha_i$ hängt wie erörtert wesentlich vom Brechungsindex $n_3$ des Mediums $M_3$ ab, das sich außerhalb des Durchtrittsfensters 18 zwischen Vorrichtung 1 und Umgebung 2 befindet. Zur Ermittlung des gesamten Winkelversatzes $\Delta\alpha_i$ beim Passieren des Durchtrittsfensters 18 ist daher auch die Kenntnis des Brechungsindexes $n_3$ erforderlich, um die aktuelle Richtung $R_i$ des von der Vorrichtung 1 auf die Umgebung 2 ausgesandten Laserstrahls 4 und damit die Richtungen $R_i$ der Abtastpunkte $P_i$, zu denen die Entfernungen $d_i$ gemessen werden, zu ermitteln.

Zu diesem Zweck verfügt die Vorrichtung 1 über einen Sensor 21 zur Bestimmung des Brechungsindexes $n_3$ des sich außerhalb des Durchtrittsfensters 18 befindenden Mediums $M_3$. Der Sensor 21 ist auf derselben Seite 22 des Gehäuses 17 angeordnet, auf der sich auch das Durchtrittsfenster 18 befindet, und zwar möglichst nahe diesem oder sogar in dieses integriert.

Der Sensor 21 kann auf jede in der Technik bekannte Art den Brechungsindex $n_3$ des Mediums $M_3$ bestimmen, sei es direkt oder indirekt, beispielsweise durch Transmissions-, Reflexions-, Leitfähigkeits-, Feuchtigkeits-, Temperatur- und/oder Druckmessungen am Medium $M_3$ mittels elektromagnetischer Wellen, Lichtstrahlen, Schallwellen, Messströme, über Elektroden, auf kapazitivem Weg oder auf induktivem Weg. Allgemein gesprochen kann der Sensor jede beliebige chemische und/oder physikalische Charakteristik des Mediums $M_3$ messen und z.B. anhand einer einprogrammierten Umrechnungsformel oder einer eingespeicherten Umrechnungstabelle den zu der bzw. den gemessenen Charakteristik(en) zugehörigen Brechungsindex $n_3$ des Mediums M3 bestimmen.

In dem gezeigten Beispiel ist der Sensor 21 ein optoelektronischer Sensor, der den Brechungsindex $n_3$ des angrenzenden Mediums $M_3$ anhand einer Bestimmung des Grenzwinkels $\Theta$ der Totalreflexion an der Grenzschicht zwischen einem Messfenster 23 des Sensors 21, welches aus einem transparenten Material mit einem Brechungsindex $n_4$ besteht, und dem Medium $M_3$ bestimmt.

Beispielsweise hat der Sensor 21 eine Lichtquelle 24, die einen Lichtstrahl 25 unter einem vorgegebenen Winkel schräg auf diese Grenzschicht richtet, welche den Lichtstrahl 25 bei einem angrenzenden Medium $M_3$ mit geringem Brechungsindex $n_3$ (wie Luft) zu einem Empfänger 26 totalreflektiert (Fig. 2), hingegen bei einem angrenzenden Medium $M_3$ mit einem höheren Brechungsindex (wie Wasser) nicht mehr totalreflektiert (Fig. 3). Durch entsprechende Veränderung des Einfallswinkels des Lichtstrahls 25 auf die Grenzschicht des Messfensters 23 mit dem Brechungsindex $n_4$ zum Medium $M_3$ kann somit der Grenzwinkel $\Theta$ der Totalreflexion und aus diesem der Brechungsindex $n_3$ des angrenzenden Mediums $M_3$ ermittelt werden anhand der bekannten Beziehung

$$n_3 = n_4 \cdot \sin\Theta \; . \qquad\qquad (9)$$

Optional kann ein Bereich 27 des Durchtrittsfensters 18 als Messfenster 23 des Sensors 21 mitverwendet werden, um die Anzahl an Durchbrechungen des Gehäuses 17 zu minimieren.

Das Gehäuse 17 oder zumindest ein Teil davon mit den Fenstern 18, 23 ist bevorzugt aus wasserdichtem Material, um eine Wasserlandung der Vorrichtung 1 auf einer Gewässeroberfläche zu ermöglichen. Auch könnte das gesamte Gehäuse 17 so ausgeführt sein, um die Vorrichtung 1 unter Wasser einsetzen zu können.

Die zweite Auswirkung, welche der Brechungsindex $n_3$ des Mediums $M_3$ zwischen der Vorrichtung 1 und der Umgebung 2 hat, ist wie erörtert jene auf die Bestimmung der Entfernungen $d_i$ aus den gemessenen Laufzeiten $\Delta T_i$ selbst. Wie aus den Gleichungen (2) und (5) ersichtlich, geht die Lichtgeschwindigkeit c im Medium $M_3$, d.h. der Brechungsindex $n_3$, direkt in die Bestimmung der Entfernungen $d_i$ ein und wird somit vom Prozessor 13 bei der Erstellung der Abtastpunktwolke 8 entsprechend berücksichtigt.

Falls gewünscht, kann der Prozessor 13 den genauen geometrischen Strahlengang des Laserstrahls 4 vom Lasersender 9 über die Ablenkeinrichtung 11, die zweimalige Brechung am Durchtrittsfenster 18, den Abtastpunkt $P_i$, die erneute zweimalige Brechung am Durchtrittsfenster 18, nochmals über die Ablenkeinrichtung 11 und zurück zum Laserempfänger 12 berücksichtigen. Denn genaugenommen ist es die gesamte Länge dieses Strahlengangs, die durch Messung der Laufzeit $\Delta T_i$ ermittelt wird. Durch Berücksichtigen der internen Geometrie der Vorrichtung 1 kann daraus die Entfernung $d_i$ von einem Referenzpunkt $P_R$ der Vorrichtung 1 zum Abtastpunkt $P_i$ ermittelt werden.

Abgesehen von der Berücksichtigung des Brechungsindexes $n_3$ bei der Ermittlung der Richtungen $R_i$ und Laufzeiten $\Delta T_i$ kann der vom Sensor 21 bestimmte Brechungsindex $n_3$ auch zur Steuerung anderer Parameter der Vorrichtung 1 verwendet werden.

Eine erste Möglichkeit besteht darin, optische Elemente im Strahlengang des Laserstrahl 4 abhängig vom Brechungsindex $n_3$ zu steuern. Damit können z.B. die Strahldivergenz des Laserstrahls 4 beim Aussenden und/oder das Empfangsgesichtsfeld des Empfängers 12 beim Empfangen des Laserstrahls 4 an das Umgebungsmedium $M_3$, z.B. Wasser oder Luft, angepasst werden.

In einer ersten Variante verfügt die Vorrichtung 1 dazu über ein erstes steuerbares optisches Element 28 im Strahlengang des Laserstrahl 4 zwischen dem Sender 9 und der Ablenkeinrichtung 11, u.zw. insbesondere - wenn das optische Element 28 nicht gleichzeitig dem Empfänger 12 vorgeschaltet sein soll - zwischen dem Sender 9 und dem halbdurchlässigen Spiegel 10. Das optische Element 28 ist so ausgebildet, dass es die Strahldivergenz des Laserstrahls 4 in Aussenderichtung $R_i$ verändern kann, z.B. von streng parallel (minimal divergent) bis schwachdivergierend, um so die Größe des jeweiligen Abtastpunktes $P_i$, der vom Laserstrahl 4 getroffen wird, zu verändern.

Das optische Element 28 kann beispielsweise ein Satz unterschiedlicher optischer Linsen sein, die in einem Schiebe- oder Drehmagazin gelagert sind und mit Hilfe eines entsprechenden Aktuators wechselweise in den Strahlgang des Laserstrahls 4 eingebracht werden können. Alternativ ist das optische Element 28 ein elektro-optisches Element, das durch Anlegen einer entsprechenden Steuerspannung seine optischen Eigenschaften, z.B. seine Refraktivität oder Diffraktivität, und damit seine Konvergenz- bzw. Divergenzwirkung ändert. Die optischen Eigenschaften des optischen Elements 28 können vom Prozessor 13 über einen Steuerpfad 29 mittels eines entsprechenden Steuersignals DIV eingestellt werden.

Der Prozessor 13 ist nun optional so ausgebildet, dass er - über den Steuerpfad 29 und das optische Element 28 - die Strahldivergenz des ausgesandten Laserstrahls 4 bei einem kleinen bestimmten Brechungsindex $n_3$, wie er beispielsweise bei Luft als Medium $M_3$ vorliegt ($n_3 \approx 1,0003$), eine höhere Strahldivergenz einstellt als bei einem größeren Brechungsindex $n_3$, wie er beispielsweise bei Wasser als Medium $M_3$ ($n_3 \approx 1,333$) der Fall ist. Damit wird der Laserstrahl 4 beim Laserscannen in Wasser (Fig. 3) maximal gebündelt (minimal divergent) ausgesandt, um die Größe der Abtastpunkte $P_i$ zu minimieren und so z.B. eine hohe räumliche Auflösung der erzeugten Abtastpunktwolke 8 zu erzielen. Umgekehrt kann beim Scannen in Luft (Fig. 2) der Laserstrahl 4 mehr aufgeweitet, d.h. in Richtung $R_i$ stärker divergierend, ausgesandt werden, um z.B. Anforderungen an die Augensicherheit zu erfüllen. Die Augensicherheit erfordert beispielsweise in einem vorgegebenen Abstand von der Vorrichtung 1 die Begrenzung auf eine maximale Strahlungsintensität, um bei einem versehentlichen Blick in den Laserstrahl 4 keinen Augenschaden zu erleiden.

In einer weiteren optionalen Variante kann die Vorrichtung 1 - alternativ oder zusätzlich zu dem ersten optischen Element 28 - ein zweites optisches Element 30 im Empfangs-Strahlengang des reflektierten Laserstrahls 4 enthalten, beispielsweis zwischen der Ablenkeinrichtung 11 und dem Empfänger 12 bzw. insbesondere zwischen dem halbdurchlässigen Spiegel 10 und dem Empfänger 12. Das zweite optische Element 30 hat dieselben Eigenschaften und optischen Konvergenz- bzw. Divergenzwirkungen wie das erste optische Element 28, bewirkt im Empfangs-Strahlengang jedoch nun eine Veränderung des Empfangsgesichtsfelds ("Field of View") des Empfängers 12. Die optischen Eigenschaften des zweiten optischen Elements 30 können vom Prozessor 13 über einen Steuerpfad 31 mittels eines entsprechenden Steuersignals FOV eingestellt werden.

Der Prozessor 13 ist nun optional so ausgebildet, dass er - über den Steuerpfad 31 und das optische Element 30 - bei einem kleinen bestimmten Brechungsindex $n_3$ (z.B. $n_3 \approx 1,0003$ für $M_3$ = Luft) ein kleines Empfangsgesichtsfeld des Empfängers 12 einstellt, hingegen bei einem größeren Brechungsindex $n_3$ (z.B. $n_3 \approx 1,333$ für $M_3$ = Wasser) ein größeres Empfangsgesichtsfeld. Damit kann z.B. der erhöhten Streuung von Licht in Wasser Rechnung getragen werden. Das Empfangsgesichtsfeld des Empfängers 12 beim Scannen in Wasser (Fig. 3) wir dadurch vergrößert, um auch Streulicht des reflektierten Laserstrahls 4 zu empfangen und so das Signal/Rausch-Verhältnis im Empfänger 12 zu verbessern, wogegen beim Scannen in Luft (Fig. 2) das Empfangsgesichtsfeld des Empfängers 12 verringert wird, um störendes Fremdlicht aus der Umgebung auszublenden. Solch störendes Fremdlicht ist beim Scannen unter Wasser kaum zu erwarten, sodass das größere Empfangsgesichtsfeld unter Wasser zu keiner Beeinträchtigung durch Fremdlicht führt, und vielmehr zur Erhöhung der Empfangssignalstärke im Empfänger 12 verwendet werden kann.

Eine weitere optionale Möglichkeit besteht darin, den bestimmten Brechungsindex $n_3$ zur Steuerung der Ablenkgeschwindigkeit $\omega/t$ der Ablenkeinrichtung 11 zu verwenden. Die Ablenkeinrichtung 11 verfügt dazu über einen vom Prozessor 13 steuerbaren Antrieb 32 zum periodischen Verschwenken des Laserstrahls 4, d.h. zum Verändern seiner (Raum-)Winkellage $\alpha_{1,i}$, über der Zeit t mit einer - zeitveränderlichen oder konstanten - Winkelgeschwindigkeit $\omega$. Der Prozessor 13 ist nun dazu ausgebildet, über einen Steuerpfad 33 die Winkelgeschwindigkeit $\omega/t$ der Ablenkabrichtung 11 in Abhängigkeit von dem bestimmten Brechungsindex $n_3$ zu steuern.

Dies kann insbesondere dazu verwendet werden, beim Scannen in Wasser die Ablenkgeschwindigkeit $\omega/t$ zu reduzieren. Damit kann dem Umstand Rechnung getragen werden, dass die Fortbewegungsgeschwindigkeit der Vorrichtung 1 in der Fortbewegungsrichtung F (Fig. 1) in Wasser aufgrund des Wasserwiderstands wesentlich geringer ist als in Luft. Bei verringerter Fortbewegungsgeschwindigkeit in der Fortbewegungsrichtung F würden in einem Scanstreifen 6 die von den Messfächern 5 erzeugten Abtastzeilen - wenn die Ablenkgeschwindigkeit $\omega/t$ nicht entsprechend mitreduziert würde - dicht an dicht zu liegen kommen, was zu einer ungleichmäßigen Verteilung der Abtastpunkte $P_i$ in x- und y-Richtung führen würde. Durch entsprechendes Anpassen der Ablenkgeschwindigkeit $\omega/t$ an den Brechungsindex $n_3$ und damit indirekt an die Dichte und den deshalb zu erwartenden Fortbewegungswiderstand kann dieser Effekt kompensiert und eine gleichmäßige Verteilung der Abtastpunkte $P_i$ über die Umgebung 2 erzielt werden.

Erfindungsgemäß wird auch die Anzahl der pro Zeiteinheit erzeugten Abtastpunkte $P_i$ an das Umgebungsmedium $M_3$ angepasst. Bei einem gepulsten Laserstrahl 4 wird jeder Abtastpunkt $P_i$ aus einem Laserimpuls $S_i$ oder einer Gruppe von Laserimpulsen $S_i$ des Laserstrahls 4 erzeugt, welche vom Sender 9 beispielsweise periodisch mit einer Impulswiederholrate PRR ("Pulse Repetition Rate") ausgesandt werden. Die Impulswiederholrate PRR des Senders 9 kann über einen Steuerpfad 34 vom Prozessor 13 gesteuert werden. Der Prozessor 13 ist nun so ausgebildet, dass er die Impulswiederholrate PRR in Abhängigkeit von dem bestimmten Brechungsindex $n_3$ steuert.

Diese Steuerung wird dazu verwendet, die Impulswiederholrate PRR bei einem hohen Brechungsindex (z.B. $n_3 \approx 1,333$ für $M_3$ = Wasser) zu reduzieren und bei einem kleinen Brechungsindex (z.B. $n_3 \approx 1,0003$ für $M_3$ = Luft) zu erhöhen. Dies kann wieder der Tatsache Rechnung tragen, dass die Fortbewegungsgeschwindigkeit der Vorrichtung 1 vom Strömungswiderstand des umgebenden Mediums $M_3$ abhängig ist, für welchen der Brechungsindex $n_3$ indirekt repräsentativ ist. Durch Anpassung der Impulswiederholrate PRR und damit der Erzeugungsrate der Abtastpunkte $P_i$ kann somit bei der Bewegung der Vorrichtung 1 wieder eine gleichmäßige Verteilung der Abtastpunkte $P_i$ über die Umgebung 2 in x- und y-Richtung erzielt werden.

Fig. 4 zeigt den Einsatz der Vorrichtung 1 zur wahlweise luftgestützten Terrainvermessung (linke Hälfte von Fig. 4) oder wassergestützten Gewässer(boden)vermessung (rechte Hälfte von Fig. 4). Die Vorrichtung 1 ist dazu in Form eines wasserlandefähigen Luftfahrzeugs ausgebildet, z.B. einer unbemannten und ferngesteuerten Helikopter- oder Multikopter-Drohne. Das Luftfahrzeug hat Schwimmkörper 24 zur Wasserlandung und eine Luft- oder Wasserschraube 25 für den Vortrieb beim Schwimmen. Alternativ könnte auch nur ein Teil des Luftfahrzeugs die Vorrichtung 1 enthalten und diesen Teil auf dem Wasser absetzen. Der Prozessor 13 berücksichtigt automatisch den vom Sensor 21 bestimmten Brechungsindex $n_3$ des jeweiligen Umgebungsmediums (linke Hälfte: Luft; rechte Hälfte: Wasser) bei der Entfernungsmessung und Verortung der Abtastpunkte $P_i$ anhand der Gleichungen (1) - (8), um die Abtastpunktwolke 8 unabhängig von Umgebungsmedium $M_3$ stets richtig zu erstellen.

Es versteht sich, dass die Vorrichtung 1 auch für andere Anwendungen als den in Fig. 4 gezeigten automatischen Wechselbetrieb zwischen luft- und wassergestütztem Scannen verwendet werden kann, beispielsweise zum Scannen in unterschiedlich feuchter Luft $M_3$, wie im Nebel oder Wolken, wo der Brechungsindex $n_3$ signifikant von jenem der trockenen Luft $M_1$ im Inneren des Gehäuses 17 abweichen kann. Die Abtastpunktwolke 8 wird durch den Prozessor 13 - abhängig von dem vom Sensor 21 bestimmten (feuchtigkeitsabhängigen) Brechungsindex $n_3$ - stets automatisch richtig, d.h. feuchtigkeitskompensiert, erstellt.

Die Erfindung ist nicht auf die dargestellten Ausführungsformen beschränkt, sondern umfasst alle Varianten, Modifikationen und deren Kombinationen, die in den Rahmen der angeschlossenen Ansprüche fallen.

**Patentansprüche**

1. Vorrichtung zum Vermessen einer Umgebung, umfassend:

   ein Gehäuse (17), das auf einer Seite (22) ein Durchtrittsfenster (18) aus wasserdichtem, transparentem Material für den Durchtritt eines Laserstrahls (4) hat,
   einen Sender (9) und einen Empfänger (12) für den Laserstrahl (4),
   eine im Strahlengang des Laserstrahls (4) dem Sender (9) nach- und dem Empfänger (12) vorgeordnete Ablenkeinrichtung (11) zum Ablenken des Laserstrahls (4),
   eine an die Ablenkeinrichtung (11) angeschlossene Messeinrichtung (16) zur Bestimmung der jeweils aktuellen Ablenkrichtung ($\alpha_{1,i}$) des Laserstrahls (4),
   einen an Sender (9), Empfänger (12) und Messeinrichtung (16) angeschlossenen Prozessor (13), der dafür ausgebildet ist, durch Laufzeitmessungen an dem in verschiedene Richtungen ($R_i$) ausgesandten und so von verschiedenen Abtastpunkten ($P_i$) der Umgebung (2) reflektierten Laserstrahl (4) die Entfernungen ($d_i$) der Abtastpunkte in den genannten Richtungen ($R_i$) zu messen und daraus eine Abtastpunktwolke (8) der Umgebung (2) in einem Koordinatensystem (7) zu erstellen, und
   einen Sensor (21) zur Bestimmung des Brechungsindexes ($n_3$) eines außerhalb des Durchtrittsfensters (18) befindlichen Mediums ($M_3$) der Umgebung (2),
   wobei der Prozessor (13) auch an den Sensor (21) angeschlossen und dafür ausgebildet ist, den vom Sensor (21) bestimmten Brechungsindex ($n_3$) bei der Messung der Entfernungen ($d_i$) und Richtungen ($R_i$) der Abtastpunkte ($P_i$) zu berücksichtigen,
   **dadurch gekennzeichnet, dass** der Laserstrahl (4) vom Sender (9) mit einer vom Prozessor (13) steuerbaren Impulswiederholrate (PRR) gepulst ist,
   wobei der Prozessor (13) dafür ausgebildet ist, die Impulswiederholrate (PRR) bei einem ersten, größeren, vom Sensor (21) bestimmten Brechungsindex ($n_3$) zu verringern und bei einem zweiten, kleineren, vom Sensor (21) bestimmten Brechungsindex ($n_3$) zu erhöhen.

2. Vorrichtung nach Anspruch 1, **dadurch gekennzeichnet, dass** im Strahlengang des Laserstrahls (4) zumindest ein vom Prozessor (13) gesteuertes optisches Element (28, 30) angeordnet und der Prozessor (13) dafür ausgebildet ist, das zumindest eine optische Element (28, 30) in Abhängigkeit des vom Sensor (21) bestimmten Brechungsindexes ($n_3$) zu steuern.

3. Vorrichtung nach Anspruch 2, **dadurch gekennzeichnet, dass** das optische Element ein vom Prozessor (13) gesteuertes optisches Element (28) zur Veränderung der Strahldivergenz des ausgesandten Laserstrahls (4) ist, das im Strahlengang des Laserstrahls (4) zwischen Sender (9) und Ablenkeinrichtung (11) angeordnet ist, wobei der Prozessor (13) dafür ausgebildet ist, die Strahldivergenz bei einem ersten, größeren, vom Sensor (21) bestimmten Brechungsindex ($n_3$) zu verringern und bei einem zweiten, kleineren, vom Sensor (21) bestimmten Brechungsindex ($n_3$) zu erhöhen.

4. Vorrichtung nach Anspruch 2, **dadurch gekennzeichnet, dass** das optische Element ein vom Prozessor (13) gesteuertes optisches Element (30) zur Veränderung des Empfangsgesichtsfelds des Empfängers (12) für den reflektierten Laserstrahls (4) ist, das im Strahlengang des Laserstrahls (4) zwischen Ablenkeinrichtung (11) und Empfänger (12) angeordnet ist, wobei der Prozessor (13) dafür ausgebildet ist, das Empfangsgesichtsfeld bei einem ersten, größeren, vom Sensor (21) bestimmten Brechungsindex ($n_3$) zu erhöhen und bei einem zweiten, kleineren, vom Sensor (21) bestimmten Brechungsindex ($n_3$) zu verringern.

5. Vorrichtung nach Anspruch 2, **dadurch gekennzeichnet, dass** zumindest zwei solche optischen Elemente (28, 30) vorgesehen sind, von denen zumindest eines nach Anspruch 3 und zumindest ein anderes nach Anspruch 4 ausgebildet ist.

6. Vorrichtung nach einem der Ansprüche 1 bis 5, **dadurch gekennzeichnet, dass** die Ablenkeinrichtung (11) mit einem vom Prozessor (13) gesteuerten Antrieb (32) zum periodischen Verändern der Ablenkrichtung (11) mit einer Ablenkgeschwindigkeit ($\omega$/t) ausgestattet ist, wobei der Prozessor (13) dafür ausgebildet ist, die Ablenkgeschwindigkeit ($\omega$/t) bei einem ersten, größeren, vom Sensor (21) bestimmten Brechungsindex ($n_3$) zu verringern und bei einem zweiten, kleineren, vom Sensor (21) bestimmten Brechungsindex ($n_3$) zu erhöhen.

7. Vorrichtung nach einem der Ansprüche 1 bis 6, **dadurch gekennzeichnet, dass** sie in Form eines bevorzugt unbemannten Luftfahrzeugs ausgebildet ist, das mit Schwimmkörpern (24) zur Wasserlandung ausgestattet ist, wobei die genannte Seite (22) des Gehäuses (17) nach unten weist.

8. Vorrichtung nach Anspruch 7, **dadurch gekennzeichnet, dass** sie mit zumindest einer Luft- oder Wasserschraube (25) zum Vortrieb beim Schwimmen ausgestattet ist.

9. Vorrichtung nach einem der Ansprüche 1 bis 8, **dadurch gekennzeichnet, dass** der Sensor (21) ein auf der genannten Seite (22) des Gehäuses (17) liegendes Messfenster (23) aus wasserdichtem, transparentem Material hat und dafür ausgebildet ist, den Brechungsindex ($n_3$) durch Bestimmung des Grenzwinkels ($\Theta$) der Totalreflexion vom Messfenster (23) zum Medium ($M_3$) zu bestimmen.

10. Vorrichtung nach Anspruch 9, **dadurch gekennzeichnet, dass** das Messfenster (22) durch einen Bereich (27) des Durchtrittsfensters (18) selbst gebildet ist.


**Claims**

1. Device for measuring an environment, comprising:

    a housing (17), which has, on one side (22), a passage window (18) made of a watertight and transparent material for the passage of a laser beam (4),
    a transmitter (9) and a receiver (12) for the laser beam (4),
    a deflection device (11) arranged in the beam path of the laser beam (4), downstream of the transmitter (9) and upstream of the receiver (12), for deflecting the laser beam (4),
    a measuring device (16) connected to the deflection device (11) for determining the respectively current deflection direction ($\alpha_{1,i}$) of the laser beam (4),
    a processor (13) connected to the transmitter (9), the receiver (12), and the measuring device (16) and configured to measure, by means of time-of-flight measurements of the laser beam (4) emitted in various directions ($R_i$) and, thus, reflected at various scanning points ($P_i$) of the environment (2), the distances ($d_i$) of the scanning points in said directions ($R_i$) and to generate, therefrom, a scanning point cloud (8) of the environment (2) in a coordinate system (7), and

a sensor (21) for determining the refractive index (n$_3$) of a medium (M$_3$) of the environment (2) located outside the passage window (18),

wherein the processor (13) is also connected to the sensor (21) and is configured to take into account the refractive index (n$_3$) determined by the sensor (21) when measuring the distances (d$_i$) and directions (R$_i$) of the scanning points (P$_i$),

**characterized in that** the laser beam (4) is pulsed by the transmitter (9) with a pulse repetition rate (PRR) that can be controlled by the processor (13),

wherein the processor (13) is configured to decrease the pulse repetition rate (PRR) in case of a first, larger refractive index (n$_3$) determined by the sensor (21), and to increase it in case of a second, smaller refractive index (n$_3$) determined by the sensor (21).

2. Device according to claim 1, **characterized in that** at least one optical element (28, 30) controlled by the processor (13) is arranged in the beam path of the laser beam (4), and the processor (13) is configured to drive the at least one optical element (28, 30) depending on the refractive index (n$_3$) determined by the sensor (21).

3. Device according to claim 2, **characterized in that** the optical element is an optical element (28) controlled by the processor (13) for modifying the beam divergence of the emitted laser beam (4) which is arranged in the beam path of the laser beam (4) between the transmitter (9) and the deflection device (11),

wherein the processor (13) is configured to decrease the beam divergence in case of a first, larger refractive index (n$_3$) determined by the sensor (21), and to increase it in case of a second, smaller refractive index (n$_3$) determined by the sensor (21).

4. Device according to claim 2, **characterized in that** the optical element is an optical element (30) controlled by the processor (13) for modifying the reception field of view of the receiver (12) for the reflected laser beam (4) which is arranged in the beam path of the laser beam (4) between the deflection device (11) and the receiver (12),

wherein the processor (13) is configured to increase the reception field of view in case of a first, larger refractive index (n$_3$) determined by the sensor (21), and to decrease it in case of a second, smaller refractive index (n$_3$) determined by the sensor (21).

5. Device according to claim 2, **characterized in that** at least two such optical elements (28, 30) are provided, wherein at least one is configured according to claim 3, and at least one other one is configured according to claim 4.

6. Device according to any one of claims 1 to 5, **characterized in that** the deflection device (11) is equipped with a motor (32) controlled by the processor (13) for periodically modifying of the deflection direction (11) at a deflection rate ($\omega$/t),

wherein the processor (13) is configured to decrease the deflection rate ($\omega$/t) in case of a first, larger refractive index (n$_3$) determined by the sensor (21) and to increase it in case of a second, smaller refractive index (n$_3$) determined by the sensor (21).

7. Device according to any one of claims 1 to 6, **characterized in that** it is configured as a preferably unmanned aerial vehicle equipped with buoyant bodies (24) for water landing, wherein said side (22) of the housing (17) is oriented downward.

8. Device according to claim 7, **characterized in that** it is equipped with at least one air or water propeller (25) for propulsion during flotation.

9. Device according to any one of claims 1 to 8, **characterized in that** the sensor (21) has a measuring window (23) made of a watertight, transparent material located on said side (22) of the housing (17) and is configured to determine the refractive index (n$_3$) by determining the critical angle ($\theta$) of total reflection of the measuring window (23) to the medium (M3) .

10. Device according to claim 9, **characterized in that** the measuring window (22) is formed by a region (27) of the passage window (18) itself.

**Revendications**

1. Dispositif de mesure d'un environnement comprenant :

un boitier (17), qui possède, sur une face (22), une fenêtre de passage (18) à base d'un matériau transparent étanche à l'eau permettant le passage d'un faisceau laser (4),

un émetteur (9) et un récepteur (12) pour le faisceau laser (4),

un dispositif de déviation (11) disposé dans le trajet du faisceau laser (4) en aval de l'émetteur (9) et en amont du récepteur (12), permettant la déviation du faisceau laser (4),

un dispositif de mesure (16) associé au dispositif de déviation (11) permettant la détermination de la direction de déviation ($\alpha_{1,i}$) respective actuelle du faisceau laser (4),

un processeur (13), associé à l'émetteur (9), au récepteur (12) et au dispositif de mesure (16), qui est conçu pour mesurer, par des mesures de temps de vol du faisceau laser (4) émis dans diverses directions ($R_i$) et réfléchi ainsi par divers points de balayage ($P_i$) de l'environnement (2), les distances ($d_i$) des points de balayage dans les dites directions ($R_i$) et établir à partir de cela un nuage de points de balayage (8) de l'environnement (2) dans un système de coordonnées (7), et

un capteur (21) permettant la détermination de l'indice de réfraction ($n_3$) d'un milieu ($M_3$) de l'environnement (2) se situant en dehors de la fenêtre de passage (18),

dans lequel le processeur (13) est également associé au capteur (21) et est conçu pour tenir compte de l'indice de réfraction ($n_3$) déterminé par le capteur (21) lors de la mesure des distances ($d_i$) et des directions ($R_i$) des points de balayage ($P_i$),

**caractérisé en ce que** le faisceau laser (4) est pulsé par l'émetteur (9) avec un taux de répétition d'impulsions (PRR) pouvant être commandé par le processeur (13),

dans lequel le processeur (13) est conçu pour diminuer le taux de répétition des impulsions (PRR) en cas d'un premier indice de réfraction ($n_3$) plus grand déterminé par le capteur (21) et l'augmenter en cas d'un second indice de réfraction ($n_3$) plus petit déterminé par le capteur (21).

2. Dispositif selon la revendication 1, **caractérisé en ce qu'**au moins un élément optique (28, 30) commandé par le processeur (13) est disposé dans le trajet de faisceau du faisceau laser (4) et le processeur (13) est conçu pour commander l'au moins un élément optique (28, 30) en fonction de l'indice de réfraction ($n_3$) déterminé par le capteur (21).

3. Dispositif selon la revendication 2, **caractérisé en ce que** l'élément optique est un élément optique (28) commandé par le processeur (13), permettant la modification de la divergence de faisceau du faisceau laser (4) émis qui est disposé dans le trajet de faisceau du faisceau laser (4) entre l'émetteur (9) et le dispositif de déviation (11),

dans lequel le processeur (13) est conçu pour diminuer la divergence de faisceau en cas d'un premier indice de réfraction ($n_3$) plus grand déterminé par le capteur (21) et l'augmenter en cas d'un second indice de réfraction ($n_3$) plus petit déterminé par le capteur (21).

4. Dispositif selon la revendication 2, **caractérisé en ce que** l'élément optique est un élément optique (30) commandé par le processeur (13), permettant la modification du champ de vision en réception du récepteur (12) pour le faisceau laser (4) réfléchi qui est disposé entre le dispositif de déviation (11) et le récepteur (12),

dans lequel le processeur (11) est conçu pour augmenter le champ de vision en réception en cas d'un premier indice de réfraction ($n_3$) plus grand déterminé par le capteur (21) et le diminuer en cas d'un second indice de réfraction ($n_3$) plus petit déterminé par le capteur (21).

5. Dispositif selon la revendication 2, **caractérisé en ce qu'**au moins deux tels éléments optiques (28, 30) sont prévus, parmi lesquels au moins un est conçu selon la revendication 3, et au moins un autre est conçu selon la revendication 4.

6. Dispositif selon l'une des revendications 1 à 5, **caractérisé en ce que** le dispositif de déviation (11) est équipé d'un moteur (32) commandé par le processeur (13), permettant la modification périodique de la direction de déviation (11) avec une vitesse de déviation ($\omega/t$),

dans lequel le processeur (13) est conçu pour diminuer la vitesse de déviation ($\omega/t$) en cas d'un premier indice de réfraction ($n_3$) plus grand déterminé par le capteur (21) et l'augmenter en cas d'un second indice de réfraction ($n_3$) plus petit déterminé par le capteur (21).

7. Dispositif selon l'une des revendications 1 à 6, **caractérisé en ce qu'**il est conçu sous la forme d'un aéronef de préférence sans personnel qui est équipé de corps flottants (24) permettant un amerrissage, où ladite face (22) du boitier (17) est orientée vers le bas.

8. Dispositif selon la revendication 7, **caractérisé en ce qu'**il est équipé d'au moins une hélice à air ou à eau (25) permettant une propulsion lors de la flottation.

9. Dispositif selon l'une des revendications 1 à 8, **caractérisé en ce que** le capteur (21) possède une fenêtre de mesure (23) à base d'un matériau transparent étanche à l'eau, située sur ladite face (22) du boitier (17) et est conçu pour déterminer l'indice de réfraction ($n_3$) par la détermination de l'angle limite ($\theta$) de la réflexion totale par la fenêtre de mesure (23) par rapport au milieu ($M_3$).

10. Dispositif selon la revendication 9, **caractérisé en ce que** la fenêtre de mesure (22) est formée par une région (27) de la fenêtre de passage (18) elle-même.

*Fig. 1*

*Fig. 4*

**Fig. 2**

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20100141928 A1
- US 10908383 B1